# EUROPÄISCHE PATENTSCHRIFT

(11) **EP 1 314 897 B1**
(45) Veröffentlichungstag und Bekanntmachung des Hinweises auf die Patenterteilung: **29.06.2005**
(21) Anmeldenummer: 02405972.7
(22) Anmeldetag: 12.11.2002
(51) Int. Cl.: F16B 13/06

(54) **Bolzendübel mit Spreizkontrolle**
Threaded anchor with expansion control
Cheville filetée à expansion contrôlée

(30) Priorität: 23.11.2001 DE 10157586
(43) Veröffentlichungstag der Anmeldung: 28.05.2003
(73) Patentinhaber: HILTI Aktiengesellschaft, 9494 Schaan (LI)
(72) Erfinder: Forster, Hubert, 82272 Moorenweis (DE); Doppelbauer, Thomas, 6800 Feldkirch (AT); Kaufmann, Herbert, 6922 Wolfurt (AT); Fuchs, Helmut, 28034 Madrid (ES); Anschütz, Frank, 9494 Schaan (LI)
(74) Vertreter: Wildi, Roland

(56) Entgegenhaltungen:
- DE-B- 1 289 366
- DE-U- 20 104 308
- DE-U- 29 602 513

## Beschreibung

Die Erfindung betrifft einen Bolzendübel, der im Oberbegriff des Patentanspruchs 1 genannten Art.

Solche Bolzendübel dienen der Befestigung von Gegenständen an einem Untergrund. In den Untergrund wird ein Bohrloch eingebracht, dessen Durchmesser etwa dem Aussendurchmesser des Bolzens entspricht oder gegenüber dem dieses gar noch ein Untermass aufweist. Der Bolzendübel wird, beispielsweise durch ein oder mehrere Schläge mit einem Hammer, in das Bohrloch gesetzt. Durch eine Relativbewegung des Bolzens, insbesondere des Konus zur, reibschlüssig an der Innenwandung des Bohrlochs festgelegten, Spreizhülse wird diese radial aufgeweitet und der Bolzendübel somit im Untergrund, insbesondere dem Bohrloch, verankert.

Aus der DE 296 02 513-U1 ist ein Bolzendübel mit einem Bolzen, der an einem Ende ein Aussengewinde, am gegenüberliegenden Ende einen, sich in Setzrichtung erweiternden, Konus und einer Spreizhülse bekannt.

Aus der DE 201 04 308 A1 ist ein Bolzendübel in Form einer Dehnschraube mit einem Bolzen, der an einem Ende ein Aussengewinde und am gegenüberliegenden Ende einen, sich in Setzrichtung erweiternden Spreizkopf aufweist, und mit einer durch den Spreizkopf aufweitbaren Spreizhülse bekannt. Der Bolzen weist an der setzrichtungsseitig abgewandten Stirnseite zumindest eine periphere Vertiefung mit einer Tiefe für den Eingriff eines Werkzeugs auf. Die Vertiefung ist zur Stirnseite und zum Aussenumfang des Bolzens hin offen ausgebildet.

Insbesondere bei der Anwendung eines abgenutzten Bohrwerkzeugs zur Erstellung eines Bohrlochs, ist der Bolzendübel nur unter hoher Krafteinwirkung, beispielsweise Hammerschläge, ins Bohrloch einzubringen. Dies führt zum Nachteil, dass das Bohrloch und/oder der Bolzendübel beschädigt werden und dadurch die geforderten Lastwerte nicht mehr gewährleistet sind oder die geforderte Setztiefe und damit die Lastwerte nicht sichergestellt sind.

Der vorliegenden Erfindung liegt die Aufgabe zugrunde, einen wirtschaftlich herstellbaren Bolzendübel derart auszubilden, dass sich aufgrund seiner Optik im gesetzten Zustand Rückschlüsse auf die Qualität der Befestigung ergeben.

Erfindungsgemäss wird die Aufgabe dadurch gelöst, dass mehrere Vertiefungen an der setzrichtungsseitig abgewandten Stirnseite vorgesehen sind, die in der Radialprojektion einen etwa dreiecksförmigen Querschnitt aufweisen.

Dadurch, dass an der setzrichtungsseitig abgewandten Stirnseite des Bolzens mehrere Vertiefungen angebracht sind, tritt beim Einbringen des Bolzendübels eine plastische Veränderung der Stirnseite ein. Je nach Stärke des Impulses und der Anzahl der auf die setzrichtungsseitig abgewandte Stirnseite des Bolzens einwirkenden Impulse, insbesondere Hammerschläge, verändern sich die Vertiefungen selbst und der an die Vertiefungen angrenzende Bereich der Stirnseite. Die Verformungen im gesetzten Zustand lassen aufgrund ihrer Optik Rückschlüsse auf die Qualität der Befestigung zu und wirken somit als Setzkontrolle. Durch die Anordnung der Vertiefungen im peripheren Bereich der setzrichtungsseitig abgewandten Stirnseite des Bolzens treten die Verformungen durch die äusseren Einwirkungen beim Einbringen des Bolzendübels in das Bohrloch in jedem Fall auf. Ferner ist es durch die periphere Anordnung der Vertiefungen beispielweise möglich Rückschlüsse auf die Richtung der Impulse zu schliessen. Idealerweise erfolgt ein Impuls in Längsrichtung des Bolzens, dies bewirkt eine gleichmässige Verformung der Vertiefungen. Wirkt ein Impuls jedoch in einem Neigungswinkel zur Längsrichtung des Bolzens, so wirkt sich dies auch auf die Verformung der Vertiefungen aus. Ein weiterer Vorteil der Vertiefungen liegt in der Aufnahme von, durch Impulse, verdrängtem Material der setzrichtungsseitig abgewandten Stirnseite des Bolzens. Damit wird eine übermässige Verformung des Aussenumfangs des Bolzens im Bereich der Stirnseite verhindert und ein problemloses Aufbringen eines Lastangriffsmittels, beispielweise einer Mutter, auf den setzrichtungsseitig abgewandten Endbereich des Bolzens sichergestellt.

Die Vertiefungen sind zum Aussenumfang des Bolzens hin offen ausgebildet, um eine Verformung der Stirnseite des Bolzens sicherzustellen. Ferner verbindern die zum Aussenumfang des Bolzens offenen Vertiefungen eine übermässige Ausdehnung des Aussenumfangs des Bolzens durch das beim Einbringen verdrängte Material. Ferner weist eine weitere Ausführung der Vertiefungen im Bereich des Aussenumfangs einen Steg mit einer geringen Wandstärke auf, um einen geschlossenen Aussenumfang sicherzustellen.

Die Vertiefungen weisen in der Radialprojektion einen etwa dreieckförmigen Querschnitt auf, um eine wirtschaftliche Herstellung des Bolzendübels zu gewährleisten.

Vorteilhafterweise bilden die Vertiefungen auf der setzrichtungsseitig abgewandten Stirnseite des Bolzens rechteck-förmige Öffnungen, um eine wirtschaftliche Herstellung des Bolzensdübels zu gewährleisten. In einer weiteren Ausführungsform bilden die Vertiefungen auf der setzrichtungsseitig abgewandten Stirnseite des Bolzens trapez-förmige Öffnungen.

Um bei jedem beim Einbringen des Bolzendübels auf die Stirnseite wirkenden Impuls eine optimale Verformung zu gewährleisten, liegen vorzugsweise jeweils zwei korrespondierende Vertiefungen einander diametral gegenüber.

Die Vertiefungen weisen vorteilhafterweise zumindest einen Abstand a von der Mittelachse des Bolzens auf, der dem 0,15- bis 0,35-fachen des Durchmessers des Bolzens entspricht, um eine optimale Lastaufnahme des Bolzens sicherzustellen.

Die Tiefe der Vertiefungen entspricht vorzugsweise dem 0,03- bis 0,08-fachen des Durchmessers des Bolzens, um eine wirtschaftliche Herstellung der Vertiefungen zu gewährleisten. Ausserdem ist dadurch sichergestellt, dass einerseits keine Beeinträchtigung der Lasthöhe des Bolzensdübels eintritt und andererseits sind die Vertiefungen, beispielsweise durch einen Anwender oder eine zur Anwendung gelangende Setzkontrollmaschine, problemlos feststellbar.

Vorteilhafterweise entspricht die sich in Umfangsrichtung des Bolzens erstreckende maximale Breite der Vertiefungen dem 0,05- bis 0,2-fachen des Durchmessers des Bolzens, um die Verformung der Vertiefungen beim Eintreiben ins Bohrloch optimal zu dimensionieren.

Vorzugsweise sind vier gleichmässig über den Umfang des Bolzens verteilte Vertiefungen vorgesehen, um unabhängig von der Richtung des beim Eintreibvorgang auf die setzrichtungsseitig abgewandte Stirnseite einwirkenden Impulses eine gut sichtbare Verformung sicherzustellen.

Die Erfindung wird nachstehend anhand eines Ausführungsbeispieles näher erläutert. Es zeigen:
- Fig. 1: Eine Seitenansicht eines erfindungsgemässen Bolzendübels;
- Fig. 2: eine vergrösserte Darstellung der Aufsicht auf die setzrichtungsseitig abgewandte Stirnseite des in Fig. 1 dargestellten Bolzendübels, gesehen in Richtung II auf Fig. 1.

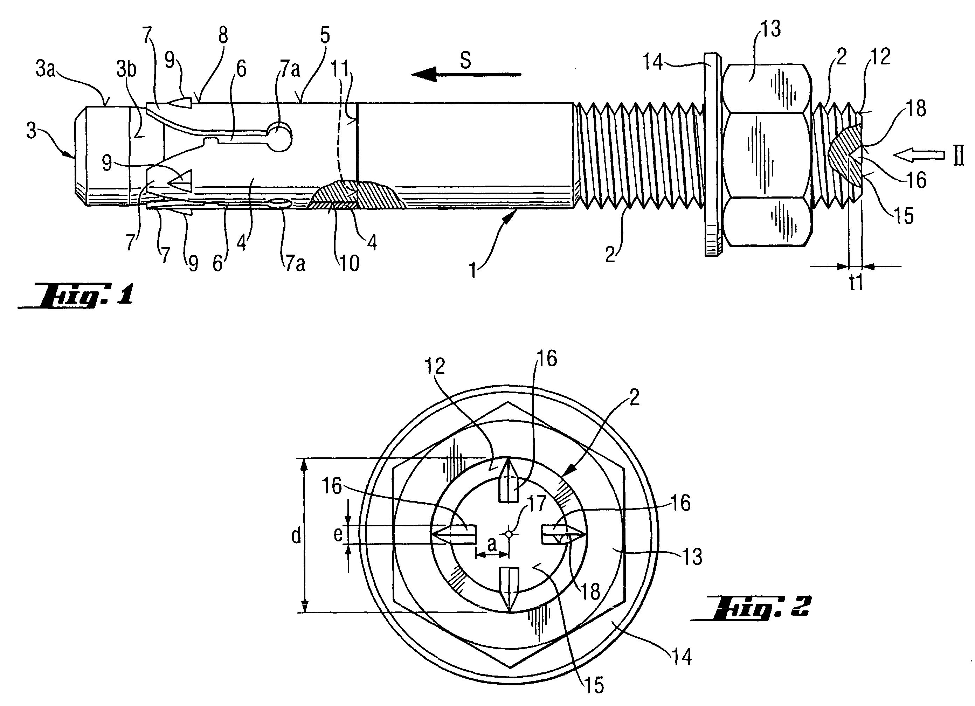

In den Fig.1 und 2 ist ein erfindungsgemässer Bolzendübel mit einem Bolzen 1, der an einem Ende ein Aussengewinde 2 und am gegenüberliegenden Ende einen, sich in Setzrichtung S erweiternden, Spreizkopf 3 aufweist und mit einer, durch den Spreizkopf 3 aufweitbaren, Spreizhülse 4, dargestellt, wobei der Bolzendübel ausserdem noch eine Mutter 13 aufweist, die auf das Aussengewinde 2 aufschraubbar ist. Üblicherweise schliesst in Setzrichtung S an die Mutter 13 eine Beilagscheibe 14 an.

Der Spreizkopf 3 weist einen im wesentlichen zylinderförmigen Abschnitt 3a auf an den sich an der setzrichtungsseitig abgewandten Seite ein, sich in Setzrichtung S erweiternder Konusabschnitt 3b anschliesst.

Die Spreizhülse 4 weist vier gleichmässig über deren Umfang 5 verteilte Längsschlitze 6 auf, die in Setzrichtung S offen ausgebildet sind und den setzrichtungsseitigen Endbereich der Spreizhülse 4 in vier Spreizlappen 7 unterteilen. Der setzrichtungsseitig abgewandte Endbereich der Längsschlitze 6, weist jeweils eine kreisförmige Durchgangsbohrung 7a auf. Die Spreizlappen 7 erstrecken sich jeweils teilweise in die Radialprojektion des Konusabschnitts 3b. Ferner weist jeder Spreizlappen 7 eine an der Aussenkontur 8, zu den Längsschlitzen 6 etwa mittig angeordnete Prägung 9 auf.

Zur Lagerung der Spreizhülse 4 weist der Bolzen 1 im betreffenden Bereich eine Verjüngung 10 auf, wobei deren Tiefe etwa der Wandstärke der Spreizhülse 4 entspricht. Die kreisringförmige, der Setzrichtung abgewandte Wandung 11 bildet für die Spreizhülse 4 einen Anschlag.

Der Bolzen 1 weist an der setzrichtungsseitig abgewandten Stirnseite 15 vier gleichmässig über dessen Umfang verteilte, periphere Vertiefungen 16 mit einer Tiefe t1 auf, die dem 0,025- fachen des Durchmessers d des Bolzens entspricht. Die, in der Radialprojektion dreiecksförmig ausgebildeten, Vertiefungen 16 sind zum angefasten Aussenumfang 12 des Bolzens 1, beziehungsweise Aussengewinde 2 hin offen ausgebildet und bilden auf der setzrichtungsseitig abgewandten Stirnseite 15 des Bolzens 1 eine grundsätzlich rechteckförmige Öffnung 18. Jeweils zwei korrespondierende Vertiefungen 16 liegen einander diametral gegenüber. Die Vertiefungen weisen von der Mittelachse 17 des Bolzens 1 einen Abstand a auf, der dem 0,3-fachen des Durchmessers d des Bolzens entspricht. Ferner entspricht die sich in Umfangsrichtung des Bolzens 1 erstreckende maximale Breite e der Vertiefungen 16 dem 0,025-fachen des Durchmessers d des Bolzens 1.

## Patentansprüche

1. Bolzendübel mit einem Bolzen (1), der an einem Ende ein Aussengewinde (2) und am gegenüberliegenden Ende einen, sich in Setzrichtung (S) erweiternden, Spreizkopf (3) aufweist, und
mit einer durch den Spreizkopf (3) aufweitbaren Spreizhülse (4), wobei
der Bolzen (1) an der setzrichtungsseitig abgewandten Stirnseite (15) zumindest eine periphere Vertiefung (16) mit einer Tiefe (t1) aufweist, wobei
die Vertiefung (16) zur Stirnseite (15) und zum Aussenumfang des Bolzens (1) hin offen ausgebildet ist, **dadurch gekennzeichnet, dass**
mehrere Vertiefungen (16) an der setzrichtungsseitig abgewandten Stirnseite (15) des Bolzens (1) vorgesehen sind, die
in der Radialprojektion einen etwa dreiecksförmigen Querschnitt aufweisen.

2. Bolzendübel nach Anspruch 1, **dadurch gekennzeichnet, dass** die Vertiefungen (16) auf der setzrichtungsseitig abgewandten Stirnseite (15) des Bolzens (1) rechteck-förmige Öffnungen (18) bilden.

3. Bolzendübel nach Anspruch 1 oder 2, **dadurch gekennzeichnet, dass** jeweils zwei korrespondierende Vertiefungen (16, 18) einander diametral gegenüberliegen.

4. Bolzendübel nach einem der Ansprüche 1 bis 3, **dadurch gekennzeichnet, dass** die Vertiefungen (16) zumindest einen Abstand (a) von der Mittelachse (17) des Bolzens (1) aufweisen, der dem 0,15- bis 0,35-fachen des Durchmessers (d) des Bolzens (1) entspricht.

5. Bolzendübel nach einem der Ansprüche 1 bis 4, **dadurch gekennzeichnet, dass** die Tiefe (t1) der Vertiefungen (16) dem 0,03- bis 0,08-fachen des Durchmessers (d) des Bolzens (1) entspricht.

6. Bolzendübel nach einem der Ansprüche 1 bis 5, **dadurch gekennzeichnet, dass** die sich in Umfangsrichtung des Bolzens (1) erstreckende maximale Breite (e) der Vertiefungen (16) dem 0,05- bis 0,2-fachen des Durchmessers (d) des Bolzens (1) entspricht.

7. Bolzendübel nach einem der Ansprüche 1 bis 6, **dadurch gekennzeichnet, dass** vier gleichmässig über den Umfang der Stirnseite (15) des Bolzens (1) verteilte Vertiefungen (16, 18) vorgesehen sind.

## Claims

1. Threaded anchor comprising a bolt (1) which at one end is externally threaded (2) and at the opposite end has an expansion head (3) which broadens out in the direction of placement (S),
and comprising an expansion sleeve (4) which is adapted to be splayed apart by the expansion head (3),
the bolt (1) having at least one peripheral depression (16) with a depth (t1) on the end face (15) facing away from the direction of placement, and
the depression (16) being open towards the end face (15) and towards the outer circumference of the bolt (1),
**characterised in that**
provided on the end face (15) of the bolt (1) that faces away from the direction of placement are a plurality of depressions (16) which
have a substantially triangular cross-section in radial projection.

2. Threaded anchor according to claim 1, **characterised in that** the depressions (16) form rectangular openings (18) on the end face (15) of the bolt (1) that faces away from the direction of placement.

3. Threaded anchor according to claim 1 or 2, **characterised in that** two mating depressions (16, 18) are situated diametrically opposite one another in each case.

4. Threaded anchor according to any one of claims 1 to 3, **characterised in that** from the central axis (17) of the bolt (1) the depressions (16) have at least a spacing (a) corresponding to 0.15 to 0.35 times the diameter (d) of the bolt (1).

5. Threaded anchor according to any one of claims 1 to 4, **characterised in that** the depth (t1) of the depressions (16) corresponds to 0.03 to 0.08 times the diameter (d) of the bolt (1).

6. Threaded anchor according to any one of claims 1 to 5, **characterised in that** the maximum width (e) of the depressions (16), as measured around the circumference of the bolt (1), corresponds to 0.05 to 0.2 times the diameter (d) of the bolt (1).

7. Threaded anchor according to any one of claims 1 to 6, **characterised by** the provision of four depressions (16, 18) that are distributed equidistantly around the circumference of the end face (15) of the bolt (1).

## Revendications

1. Cheville-goujon, comprenant un goujon (1) qui comporte, à une extrémité, un filetage extérieur (2) et, à l'extrémité opposée, une tête d'expansion (3) s'élargissant dans la direction de scellement (S), et comprenant un manchon expansible (4) déployable par la tête d'expansion (3), le goujon (1) étant pourvu d'au moins un renfoncement périphérique (16) de profondeur (t1) dans la face frontale (15) orientée à l'opposé de la direction de scellement, le renfoncement (16) étant conformé de manière ouverte en direction de la face frontale (15) et de la périphérie extérieure du goujon (1), **caractérisée en ce que**, sur la face frontale (15) du goujon (1) orientée à l'opposé de la direction de scellement, sont prévus plusieurs renfoncements (16) qui présentent, en projection radiale, une section transversale sensiblement triangulaire.

2. Cheville-goujon selon la revendication 1, **caractérisée en ce que** les renfoncements (16) dans la face frontale (15) du goujon (1) orientée à l'opposé de la direction de scellement forment des ouvertures rectangulaires (18).

3. Cheville-goujon selon la revendication 1 ou 2, **caractérisée en ce que** les renfoncements correspondants (16, 18) sont opposés diamétralement deux à deux.

4. Cheville-goujon selon une des revendications 1 à 3, **caractérisée en ce que** les renfoncements (16) présentent, par rapport à l'axe médian (17) du goujon (1), une distance (a) qui correspond à 0,15 à 0,35 fois le diamètre (d) du goujon (1).

5. Cheville-goujon selon une des revendications 1 à 4, **caractérisée en ce que** la profondeur (t1) des renfoncements (16) correspond à 0,03 à 0,08 fois le diamètre (d) du goujon (1).

6. Cheville-goujon selon une des revendications 1 à 5, **caractérisée en ce que** la largeur maximale (e) des renfoncements (16) prise dans la direction circonférentielle du goujon (1) correspond à 0,05 à 0,2 fois le diamètre (d) du goujon (1).

7. Cheville-goujon selon une des revendications 1 à 6, **caractérisée en ce qu'**il est prévu quatre renfoncements (16, 18) répartis de manière uniforme sur la circonférence de la face frontale (15) du goujon (1).
